(19)

Europäisches
Patentamt
European
Patent Office
Office européen
des brevets

(11) **EP 2 351 544 A1**

(12) **EUROPEAN PATENT APPLICATION**
published in accordance with Art. 153(4) EPC

(43) Date of publication:
03.08.2011  Bulletin 2011/31

(21) Application number: 09823569.0

(22) Date of filing: 27.10.2009

(51) Int Cl.:
*A61F 9/00* (2006.01)          *A61B 3/028* (2006.01)
*A61F 5/00* (2006.01)          *A61F 9/007* (2006.01)

(86) International application number:
**PCT/JP2009/068379**

(87) International publication number:
**WO 2010/050459 (06.05.2010 Gazette 2010/18)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: 29.10.2008  JP 2008278806
28.07.2009  JP 2009175857

(71) Applicant: **Panasonic Electric Works Co., Ltd.
Kadoma-shi
Osaka 571-8686 (JP)**

(72) Inventors:
• **SUZUKI, Yusuke**
  **Kadoma-shi**
  **Osaka 571-8686 (JP)**
• **FUKUSHIMA, Shogo**
  **Kadoma-shi**
  **Osaka 571-8686 (JP)**

(74) Representative: **Appelt, Christian W.
Forrester & Boehmert
Pettenkoferstrasse 20-22
80336 München (DE)**

(54)    **TARGET PRESENTATION DEVICE, IMAGE DISPLAY SYSTEM, AND VEHICLE-MOUNTED
DISPLAY DEVICE**

(57)    A target presentation device comprises a concave mirror, a half mirror 3, and a movement device 4. The concave mirror 2 presents the virtual image of the image displayed on the image display device to the observer. The concave mirror is disposed such that the optical distance between the image display device and the concave mirror is set to be shorter than the focal point distance. The half mirror crosses and is inclined with the optical axis of the concave mirror. The optical axis passes through the observation position of the observer. The movement device moves the image display device to vary the image display device, whereby the optical distance is varied within the focus distance. The movement device moves the image display device to increase the virtual image's movement speed as the optical distance becomes long. Consequently, the fatigue of the focusing function of the observer is reduced.

*FIG. 1*

EP 2 351 544 A1

**Description**

TECHNICAL FIELD

This invention relates to a target presentation device for presenting the target to observer, an image display system, and a display device for vehicle.

BACKGROUND ART

Recently, according to advance of the information technology, operation with using the visual terminal device (such as a monitor of a personal computer) is increased. (Hereinafter, the operation with using the visual terminal device is referred to as VDT operation.) According to the advance of the information technology, the efficiency of the operation and the accuracy of the operation are greatly improved.

However, the VDT operation over a long period of time causes the fatigue of eyes of the operator. Similar fatigue of the eye is also caused by watching the TV monitor over a long period of time.

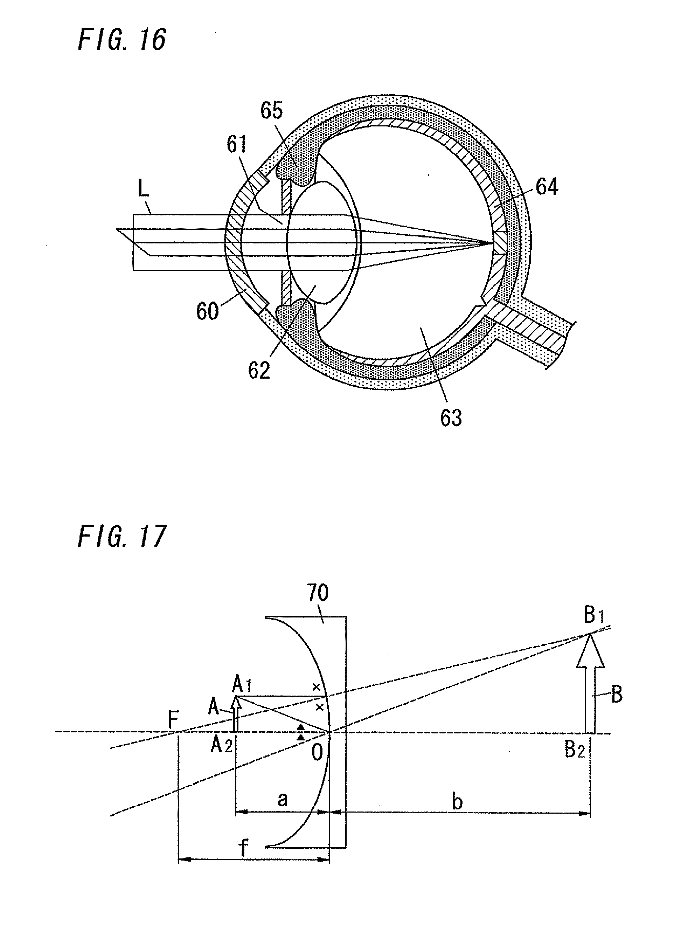

Next, the explanation of the human's eye is made. Fig. 16 shows the structure of the eye of the human. The musculus ciliaris (including Zinn's zonule) 65 varies the thickness of the crystalline lens 62 so that the musculus ciliaris adjusts the refractive power of the crystalline lens 62. Consequently, the light beam L from the object being watched passes through the cornea 60, the pupil 61, the crystalline lens 62, the corpus vitreum 63, and forms the image on the retina 64. This function of the eye is referred to as focusing function. That is, the focusing function (focusing mechanism) is defined as the function (mechanism) of varying the refractive power of the crystalline power 62 according to the distance between the crystalline lens 62 and the target, whereby the focusing function forms the the image on the retina 64 constantly.

Generally, when the observer watches the display of the visual terminal device or the display of the TV monitor at close range, the musculus ciliaris 65 is tensed. This is because the musculus ciliaris 65 is an operation source of the focusing function. When being focused on a near vision, the parasympathetic nervous comes to an abnormally excited condition. In addition, when being focused on a near vision, the musculus ciliaris 65 comes to the tensed condition. These conditions are contributory factor of the fatigue of the strain. When the tensed condition is kept over a long period of time, the focusing function of the musculus ciliaris 65 is decreased temporarily.

With regard to this, Japanese patent application No. 3766681B (which is referred as to Patent Literature 1) discloses the target presentation device for recovery of the power of the vision. The target presentation device is configured to encourage the lively activity of the focusing function of the eyes. The target presentation device of the Patent Literature 1 produces the target, and moves the target on the line of vision of the observer who watches the target such that the target is moved toward and away from the observer, repeatedly. In this manner, the target presentation device activates the focusing function of the eyes of the observer.

The target presentation device of the patent literature 1 is configured to give stimulation to the fatigued eye in order to activate the focusing function. However, it is preferable to give the stimulation to the eyes constantly during the operation of the VDT or during the watch of the monitor. Consequently, it is possible to prevent the fatigue of the eye. Therefore, this is an idealized means of prevention of the fatigue of the eyes. Therefore, in light of the introduction to the VDT operation and the homeplace, it is preferred that the target display device has a small size. In addition, in light of the workability and visibility, there is a need for the image on the retina of the observer to have a size which is greater than a predetermined size.

However, in the target presentation device of the Patent Literature 1, the entire length of the device is equal to the movement distance of the target. Therefore, in order to give the sufficient effect of reduction of the fatigue of the eyes to the observer, there is a need to move the target by the several meters. Therefore, the target presentation device of the Patent Literature 1 has a problem that the target presentation device has a large size. In addition, when the object which projects the image having a predetermined size is moved, the size of the image on the retina of the observer is enormously varied according to the position of the object. It is difficult to solve the problem by the variation the size of the image according to the variation of the display size.

In order to solve the problem, the target presentation device comprising a concave mirror is well known. (This is, for example, disclosed in Japanese patent application publication No. H6-27411A. Hereinafter, H6-27411A is referred as to Patent Literature 2.) The target presentation device is configured to provide the virtual image to the observer. The virtual image is magnified by the concave mirror, and is defined as the target.

Fig. 17 shows a principle of the image display with using the concave mirror 70. The mirror surface (which is defined as a reflection surface) of the concave mirror 70 is a spherical surface. Focus position of the concave mirror 70 is symbolized by F. When the object A which is a real image is located at a position closer to the concave mirror 70 than the focus position F, the concave mirror 70 forms the erected virtual image which is symbolized by B. (In other words, when the object A is located on the right position of Fig. 17, the concave mirror 70 forms the erected virtual image which is symbolized by B.)

Therefore, the relationship of the distance b, the distance a, and the focal point distance f is explained by the following formula (1).

## Formula (1)

$$b = a \times f / (a - f)$$

The distance b is defined by the distance between the concave mirror 70 and the virtual image B.

The distance a is defined by the distance between the concave mirror 70 and the object A.

The symbol f indicates the focal point distance.

In addition, the relationship of "the size $B_1$ and $B_2$ of the virtual image B" and "the size $A_1$ and $A_2$ of the object A" is expressed by the following formula ( 2 ).

## Formula (2)

$$B_1 B_2 = A_1 A_2 \times |f| / |a - f|$$

In the above target presentation device, the observed target is defined by the virtual image B which is formed when the object A is moved within a range between the center point O of the concave mirror 70 and the focus position F. Consequently, even if the object A is moved by a small range, it is possible to move the virtual image B (which is the observed target) by a great deal. Consequently, it is possible to produce the viewing device for prevention of the decrease of the power of the vision. The target presentation device is realized by the following example. When the concave mirror 70 having the spherical surface having the focal point distance f which is equal to 150 mm, the curvature radius is equal to 300 mm, and a is equal to 100 mm, b is equal to - 0.3 m. When the concave mirror 70 having the spherical surface having the focal point distance f which is equal to 150 mm, the curvature radius is equal to 300 mm, and a is equal to 148 mm, b is equal to - 11 m. Therefore, it is possible to achieve the great deal of the movement of the virtual image, compared with the movement of the object A. That is, according to the small movement of the object A, it is possible to realize the great deal of the movement of the virtual image which is to be observed. Therefore, by varying the distance a between the object A and the concave mirror 70, it is possible to stimulate the focusing function of the observer's eye that the observer watches the virtual image B of the object.

In addition, as the object A comes closer to the focus position F and virtual image B is moved toward the far point, the enlargement factor of the virtual image B relative to the object A is increased. As a result, even if the distance b is varied, the size of the virtual image B on the retina of the observer's eye is approximately kept constant.

As mentioned in the above target presentation device which comprises the concave mirror 70, the distance a between the object A and the concave 70 is continuously varied. Consequently, it is possible to apply the stimulation of the focusing function of the observer who watches the virtual image B of the object A. As a result, in the target presentation device with using the concave mirror 70, the variation of the optical distance between the object A and the concave mirror 70 makes it possible to reduce the fatigue of the focusing function of the eyes. It is noted that the above mentioned target presentation device employs the configuration which allows the both eyes to watch the virtual image B, in considering the comfort.

However, when object A and the concave mirror 70 are arranged as indicated by Fig. 17, there is a problem that the object A blocks the line of vision of the observer who watches the virtual image B.

One of the means of solving the above problem is disclosed in Fig. 18. (The means of solving the above problem is disclosed in Patent Literature 2, Japanese patent application publication No. 11-244239 (hereinafter referred as to Patent Literature 3), Japanese patent application publication No. 2000-171751 (Hereinafter referred as to Patent Literature 4)). Fig. 18 shows a half mirror 71 which is inclined and crossed with respect to the optical axis Lx of the concave mirror 70. The half mirror 71 is disposed between the concave mirror 70 and the observer P. When the half mirror 71 is disposed such that the half mirror 71 reflects the light beam from the object A to the concave mirror 70 along a direction of the optical axis of the concave mirror 70, the light beam A is reflected by the half mirror 71. As a result, the virtual image of the object A is created by the concave mirror 70. Consequently, the observer P is able to watch the virtual image which passes through the half mirror 71.

Patent literature 2 discloses the device which comprises the concave mirror and the half mirror. The device of the Patent Literature 2 is, for example, used in the simulator such as flight simulator and space docking simulator. The device in the Patent Literature 2 is used to match the distance of the image formation of the presentment and the actual distance to the presentment. Consequently, the effect of the simulator is improved.

The Patent literature 3 discloses the optometer. The optometer has a small size, and employs the principle of the concave mirror in order to perform the measurement of the visual acuity in the various visual distance.

However, when the prior target presentation device is used by the observer P, there is little need to vary the refractive power of the crystalline lens even if the virtual image which is defined as the target is moved away from the observer. Therefore, the musculus ciliaris is kept tension, whereby it is impossible to obtain the effect of reduction of the fatigue of the focusing function.

DISCLOSURE OF THE INVENTION

This invention is achieved to solve the above object. An object of this invention is to provide the target presentation device, the image display system, and the display device for vehicle which are configured to reduce the fatigue of the focusing function of the observer

The target presentation device in this invention is configured to present the visual image (defined as a target) to the observer. The target presentation device comprises the concave mirror and the distance adjustment means. The concave mirror has a focal point distance. The concave mirror is disposed such that the optical distance is set to be shorter than the focal point distance. The optical distance is defined by a distance between the concave mirror and the object. The concave mirror is configured to form the virtual image. The distance adjustment means is configured to vary the optical distance within a range which is set to be shorter than the focal point distance of the concave mirror. As the distance to the virtual image becomes great, the distance adjustment means is configured to increase a movement speed of the virtual image.

The object is exemplified by the image, the image display device configured to display the image, and the three dimensional body. The image is exemplified by the moving image (video picture), stop motion (photograph and picture). This definition is same in the following explanation.

With this configuration, as the distance to the position of the virtual image becomes great, the movement speed of the virtual image is increased. Consequently, not only in a condition where the virtual image is located near the observation point but also in a condition where the virtual image is moved away from the observation point, it is possible to keep the time variation of the refractive power of the crystalline lens of the observer constant. Therefore, it is possible to sufficiently reduce the fatigue of the focusing function of the observer.

It is preferred that the target presentation device further comprises a half mirror. The half mirror is disposed to be inclined with respect to an optical axis of said concave mirror. The half mirror crosses the concave mirror. The half mirror has a surface which is faced with the concave mirror, and is configured to reflect the object at the surface which is faced with the concave mirror. The object is disposed such that the virtual image of the object is projected to the observer through the half mirror.

With this configuration, the half mirror is inclined with respect to the optical axis of the concave mirror. Therefore, it is possible to prevent the object itself from blocking the target when the target (which is defined by the virtual image) is presented to the observer.

It is preferred that the distance adjustment means is configured to move the object.

With this configuration, the distance adjustment means is configured to move the object. Therefore, it is possible to move the virtual image of the object. So, compared with a case where the virtual image is moved according to the movement of the concave mirror, there is no need to vary the position of the eyes of the observer. That is, it is possible for the observer to watch the target at the same observation point.

It is preferred that the distance adjustment means is configured to increase the movement speed of the object as the optical distance becomes great.

With this configuration, it is possible to increase the movement speed of the virtual image as the virtual image moves away from the observation point.

It is preferred that the observation point is located before the concave mirror. The distance adjustment means is configured to move the object such that a time variation of an inverse number of the distance between the observation point and the virtual image of the object is kept constant.

With this configuration, the a time variation of the inverse number of the distance between the observation point and the virtual image of the object is kept constant. Therefore, as the virtual image moves away from the observation point, it is possible to effectively increase the movement speed of the virtual image. Consequently, it is possible to further reduce the fatigue of the focusing function of the observer.

It is preferred that the distance adjustment means is configured to vary the optical distance such that the target reciprocates repeatedly.

With this configuration, the target is reciprocated repeatedly. Therefore, it is possible to effectively vary the refractive power of the crystalline lens of the observer. Therefore, it is possible to further reduce the fatigue of the focusing function of the observer.

It is preferred that the distance adjustment means is configured to move the target periodically.

In this case, the target is reciprocated periodically. Therefore, it is possible to frequently vary the refractive power of the crystalline lens of the observer. So, it is possible to further reduce the fatigue of the focusing function of the observer.

It is preferred that the distance adjustment means is configured to continuously move the target.

With this configuration, it is possible to gradually move the object according to the continuous movement of the target. Therefore, it is possible to move the virtual image of the object without regard for the observer.

It is preferred that the target presentation device comprises a flat panel display. The flat panel display is configured to display the image of the target.

In this case, the target presentation device comprises the flat panel display for displaying the image of the object. Therefore, the target presentation device has an optical advantageous, compared with the curved panel.

It is preferred that the target presentation device comprises the reduction means being configured to reduce the distortion of the virtual image.

With this configuration, the distortion of the virtual image of the target is reduced. Therefore, it is possible to prevent the fatigue of the focusing function of the eyes, without regard to the distortion of the target.

It is preferred that the reduction means is formed by the concave mirror. The concave mirror has a mirror surface which is aspheric surface such that the mirror surface reduces the distortion of the virtual image.

With this configuration, the concave mirror has the mirror surface which is aspheric surface. So, it is possible to improve the reduction effect of the distortion of the target regardless of whether the surface of the object is flat or the surface of the object is curved.

It is preferred that the concave mirror has a curvature radius which becomes greater toward a center of the mirror surface.

With this configuration, the concave mirror has the mirror surface which has a curvature radius which becomes greater toward a center of the mirror surface. Therefore, it is possible to reduce the distortion of the target.

It is preferred the concave mirror has a ratio of a curvature radius of the center of the mirror surface in a first direction to the curvature radius of an end of the mirror surface in the first direction. The first direction passes through both eyes of the observer. The concave mirror has a ratio of a curvature radius of a center of the mirror surface in a second direction to the curvature radius of an end of the mirror surface in the second direction. The second direction is perpendicular to the first direction. When the concave mirror presents the target to the observer, the ratio in the first direction is greater than the ratio in the second direction.

In this case, the curvature radius of the center of the mirror surface in the first direction to the curvature radius of the end of the mirror surface in the first direction is greater than the curvature radius of the center of the mirror surface in the second direction to the curvature radius of the end of the mirror surface in the second direction which is perpendicular to the first direction which passes through both the eyes of the observer. Therefore, it is possible to prevent the virtual image from having the three dimensional appearance due to the binocular disparity.

It is preferred that the reduction means is formed with using the object. The object is formed to have a curved surface so as to reduce the distortion of the virtual image.

With this configuration, the object has the surface which is a curved surface. Therefore, it is possible to improve the reduction effect of the distortion of the target, regardless of whether the concave mirror has a mirror surface which is spherical surface or the concave mirror has a mirror surface which is aspheric surface.

It is preferred that the object has a convex which projects toward the concave mirror.

With this configuration, the object has the convex which projects toward the concave mirror. Therefore, it is possible to further reduce the distortion of the target.

It is preferred that the object is shaped to be cylindrically curved. The object has an axial direction which is perpendicular to the direction which passes through both the eyes of the observer, when the target is presented to the observer.

With this configuration, it is possible to reduce the distortion of the virtual image in a direction which passes through the both eyes of the observer when the object is projected to the concave mirror. Therefore, it is possible to prevent the distortion of the virtual image due to the binocular disparity, whereby it is possible to prevent the three dimensional appearance of the virtual image.

It is preferred that the target presentation device comprises a flat panel display which is configured to display the image. The reduction means is formed by the object, and the object is an image which is displayed on the flat panel display. The image is deformed in advance such that the distortion of the virtual image is reduced when the image is projected to the concave mirror.

In this case, the image which is displayed on the flat panel display is deformed in advance. Therefore, it is possible to improve the reduction effect of the distortion of the target, regardless of whether the concave mirror has a mirror surface which is spherical surface or the concave mirror has a mirror surface which is aspheric surface.

The image display system in this invention comprises the target presentation device and the image display device which is configured to display the image. The image display device is configured to display the virtual image of the image. The target presentation device is configured to present the virtual image to the observer.

The display device for vehicle in this invention comprises the target presentation device and an image display device which is configured to produce the information with regard to driving of a vehicle. The image display device is configured to display the virtual image of the information which is produced by the image display device. The target presentation device presents the visual image to the observer. The visual image is defined as the target.

It is preferred that the target presentation device comprises the visual distance estimation device which is configured to estimate a visual distance of the observer. The visual distance estimation device is configured to vary the optical distance between the image display device and the concave mirror such that the visual distance to the virtual image becomes great as the visual distance of the observer increases.

With this configuration, the visual distance of the front where the driver (observer) watches during the driving is coincided with the visual distance of the information of the driving. Therefore, it is possible to reduced the fatigue due to the adjustment of the focus of the driver.

BRIEF EXPLANATION OF DRAWINGS

Fig. 1 shows an exterior appearance of the target presentation device of the first embodiment.

Fig. 2 shows the explanation illustration of explaining the operation of the target presentation device of the above.

Fig. 3 shows the movement speed of the virtual image in the target presentation device of the above.

Fig. 4 shows another example of the movement speed of the virtual image in the target presentation device of the above.

Fig. 5 shows design parameters of the target presentation device of the second embodiment.

Fig. 6A shows an illustration indicative of the point of the image formation of the target presentation device of the above.

Fig. 6B shows an illustration of the probability distribution of x which is arbitrary.

Fig. 7 shows a shape of the virtual image of the target presentation device of the above.

Fig. 8 shows a shape of the virtual image of the target presentation device of the third embodiment.

Fig. 9 shows a shape of the virtual image of the target presentation device of the fourth embodiment.

Fig. 10 shows design parameters of the target presentation device of the fifth embodiment.

Fig. 11 shows a shape of the image display device of the target presentation device of the above.

Fig .12 shows a shape of the virtual image of the target presentation device of the above.

Fig .13 shows an arrangement drawing of the eighth embodiment.

Fig. 14 shows an exterior appearance of the above.

Fig. 15A shows an illustration in a case where far area is seen in the ninth embodiment.

Fig. 15B shows an illustration in a case where near area is seen in the above embodiment.

Fig. 16 shows a cross sectional view of the structure of the eye of the human.

Fig. 17 shows a principle of the concave mirror.

Fig. 18 shows configuration employing the concave mirror and the half mirror.

Fig. 19 shows an explanation of the horopter.

Fig. 20 shows a distortion of the virtual image of the target presentation device in the prior art.

BEST MODE FOR CARRYING OUT THE INVENTION

(FIRST EMBODIMENT)

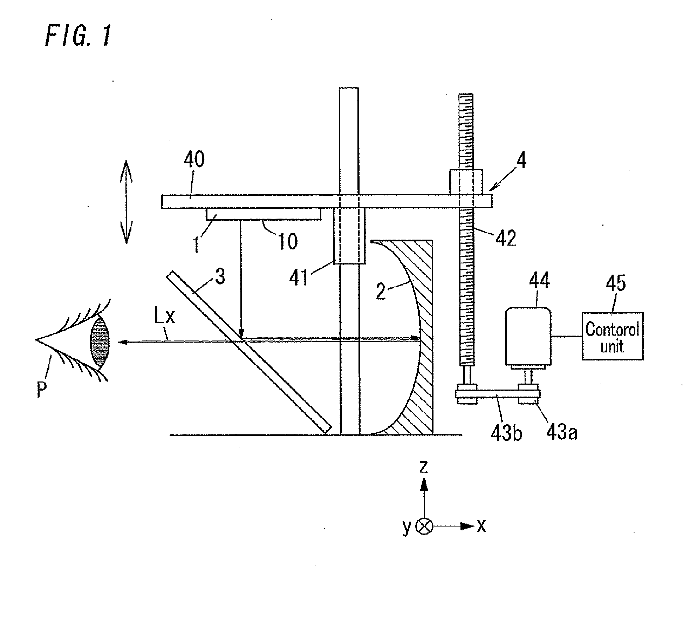

Hereinafter, the configuration of the target presentation device in the first embodiment in this invention is made. Fig. 1 shows a configuration of the target presentation device in this embodiment. As will be understood from Fig. 1, the target presentation device comprises the image display device ( picture display device ) 1, the concave mirror 2, the half mirror 3, and the movement device 4. The image display device 1 is configured to display the image (picture) on the image display surface (picture display surface). The concave mirror 2 is disposed such that the concave mirror makes the optical distance between the image display device 1 and the concave mirror 2 shorter than the focal point distance. The half mirror 3 is disposed to be crossed and inclined with respect to the optical axis Lx of the concave mirror 2. The optical axis Lx of the concave mirror 2 passes through the observation point where the observer P observes. (Hereinafter, " observation position " is referred to as " observation point ".) The movement device 4 is configured to move the image display device 1. The target presentation device in this embodiment is configured to form the virtual image B which is formed by the concave mirror 2 (reference is made in Fig. 17). Consequently, the target presentation device in this embodiment presents the virtual image B to the observer P.

In order to reduce the distortion of the virtual image on the concave mirror 2, it is preferred that the image display device 1 comprises the image display surface 10 which is flat. Therefore, the image display device 1 is realized by the flat panel display which has a compact size. The flat panel display is exemplified by the liquid crystal panel and the organic Electro-Luminescence display. The contents of the image which is displayed on the image display device 1 not limited. The contents of the image which are displayed on the image display device are used such as written document, still image (picture and drawing), moving image (video picture), game. That is, the contents of the image are selected according to the like of the observer P. The image display device 1 is configured to switch the displayed image easily. The image display device 1 is configured to perform the image process of the displayed image easily. The image in this embodiment corresponds to the object in this invention.

In addition, the image display device 1 may comprise the control unit (which is not illustrated in the figures). The control unit is configured to correct the distortion, the brightness, and the display size of the position of the virtual image which is explained below. Consequently, it is possible to reduce the consciousness of the observer with respect to the movement of the virtual image. So, this configuration makes it possible to allow the observer P to concentrate the VDT operation and the watch, similar to the prior VDT and TV monitor.

Furthermore, the image display device 1 is configured to vary the brightness of the displayed image according to the optical distance between the image display device 1 and the concave mirror 2. (The optical distance between the image display device 1 and the concave mirror 2 is, in other words, the relative position of the image display device 1 relative to the concave mirror 2.) Consequently, the image display device 1 is capable of presenting the virtual image B having a constant brightness to the observer P. In addition, the image display device 1 also may be configured to vary the brightness of the displayed image according to the wish of the observer P.

The concave mirror 2 is configured to reflect the image which is displayed on the image display device1, whereby the concave mirror 2 presents the virtual image B (referred to Fig. 17) which is defined as the target to the observer P through the half mirror 3. The observation position which is defined as the observation point of the observer P is located in the front of the concave mirror 2 (, corresponding to the left of the concave mirror 2 of Fig. 1).

The half mirror 3 is disposed such that the half mirror 3 crosses the optical axis Lx of the concave mirror 2, and such that surface of the half mirror 3 is inclined at 45 degrees to with respect to the optical axis Lx. The image which is displayed on the image display device 1 is reflected by the half mirror 3, whereby the image is reflected toward the concave mirror 2 along the optical axis Lx of the concave mirror 2. The virtual image B of the image is presented to the observer P through the half mirror 3.

The above mentioned image display device 1, the concave mirror 2 and the half mirror 3 are arranged such that the image which is displayed on the image display device 1 is reflected by a surface (which is faced to the concave mirror 2) of the half mirror 3. Consequently, the image which is displayed on the image display device 1 is projected to the concave mirror 2. As a result, the virtual image B of the above image is presented to the observer P through the half mirror 3. In this manner, it is possible to prevent the image display device 1 from blocking the line of vision of the observer P, unlike the configuration that the image display device 1 is disposed between the observer P and the concave mirror 2.

The movement device 4 is a movement mechanism of the image display device 1. The movement device 4 comprises the holding plate 40, the linear guide 41, the lead screw 42, a pulley 43a, a pulley belt 43b, a motor 44, and a control unit 45. The movement device 4 corresponds to the distance adjustment means in this invention.

The holding plate 40 holds the image display device 1. The linear guide 41 supports the holding plate 40. The motor 44 is an electronic motor which acts as the operation source of the movement device 4. The pulley 43a is cooperative with the pulley belt 43b to transmit the rotary drive force to the lead screw 42. The control unit 45 is configured to control the motor 44. That is to say, the movement device 4 is configured to convert the rotary drive force which is generated by the motor 44 into the linear movement by the lead screw 42. Consequently, the movement device 4 realizes the movement in the vertical direction (which is indicated by the arrow of Fig. 1) of the image display device 1. The control unit 45 is configured to move the image display device 1 in the vertical direction such that the control unit 45 varies the optical distance between the image display device 1 and the concave mirror 2 within a range which is shorter than the focal point distance of the concave mirror 2. The control unit 45 is configured to control the rotary speed of the motor 44, whereby the control unit 45 freely controls the movement speed of the image display device. Consequently, the control unit 45 is configured to move the image display device 1 by a speed in accordance with the movement speed law which is physiologically adapted to the eyes of the observer. The control unit 45 is realized by the processing unit such as computer. It is possible to employ commodity type computer such as a personal computer. In addition, it is also possible to employ the special computer for the target presentation device as the computer.

When the movement device 4 moves the image display device 1 in the vertical direction, the distance between the image on the image display surface 10 of the image display device 1 and the optical axis Lx of the concave mirror 2 is varied. Consequently, the optical distance between the image display device 1 and the concave mirror 2 is varied.

When the optical distance is varied, the optical distance between the concave mirror 2 and the virtual image B is varied.

Next, the explanation of the movement range of the virtual image B is made. According to the formula (1) which indicates the position relationship between the real image (image display device 1) and the virtual image B, the virtual image B is drastically moved to the infinity as the image display device 1 moves closer to the focus position. In addition, it is said that the closest point where the twenty-year-old observer P can perform the distinct vision is average of 0.18 m (in other words, about 8.5 diopter). (The closest point where the twenty-year-old observer P can perform the distinct vision is, in other words, the near-point of accommodation.) Therefore, it is sufficient to set the closest position such that the distance between the observer P and the target is set by -0.1 meter (-0.1 D). In contrast, it is sufficient to set the farthest position such that the distance between the observer P and the target is set by - 10 meter (-0.1 D). The distance range between the observer P and the target is set such that it is possible to obtain the effect of the prevention of the fatigue of the focusing function of the eyes. The control unit 45 is configured to control the motor 44 such that the image display device 1 is moved within the movement range which is set to realize the closest position and the farthest position.

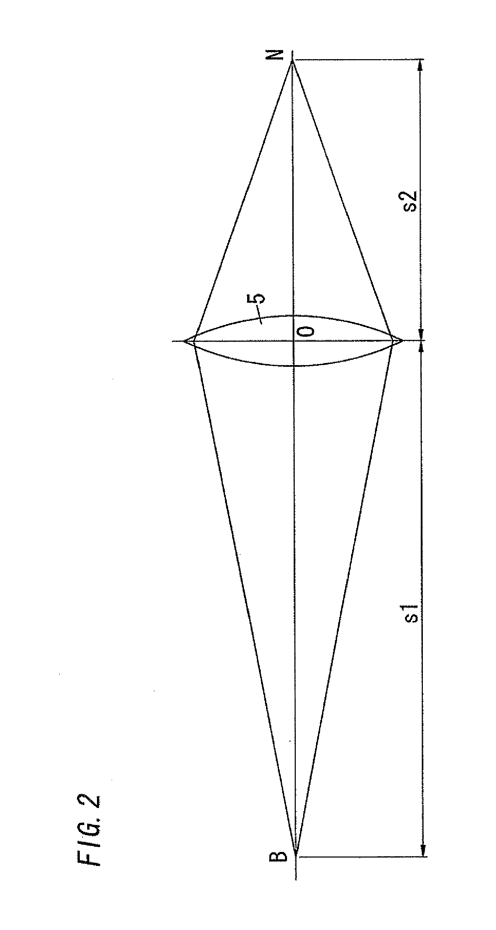

Next, the explanation of the movement speed of the image display device 1 which is controlled by the control unit 45 is made. First, as shown in Fig. 2, the crystalline lens 5 of the eyes of the observer P (show Fig. 1) is supposed as the thin convex lens. In addition, the distance between the center point O of the crystalline lens (defined as the observation point) and the virtual image B (point of gaze) is defined as s1. (s1 < 0) The distance between the center point O of the crystalline lens and the retina (point of the image formation) N is defined as s2. (s2 > 0) The refractive power of the crystalline lens 5 which is represented by the diopter is defined as D. Under this situation, the following formula ( 3 )is satisfied.

### Formula (3)

$$1/s2 = 1/s1 + D$$

The focusing function of the eyes is a function of varying the refractive power D of the crystalline lens 5 according to the distance S1 between the crystalline lens 5 and the virtual image B. Consequently, the focusing function of the eyes forms the image on the retina N consistently. As will be understood from the formula (3), as the distance s1 between the crystalline lens 5 and the virtual image B becomes greater, the degree of the influence that the time variation of the distance s1 (between the crystalline lens 5 and the virtual image B) applied to the refractive power D becomes smaller. That is, when "a case where the distance between the crystalline lens 5 and the virtual image B is short (in other words, there is a short distance between the crystalline lens 5 and the virtual image B)" is compared with "a case where the distance between the crystalline lens 5 and the virtual image B is long (in other words, there is a long distance between the crystalline lens 5 and the virtual image B", the case in the short distance exert a great influence to the variation of the refractive power, even if the movement distance of the virtual image B is same. In contrast, the case in the long distance exerts a little influence to the variation of the refractive power. In other words, when the same amount the variation of the refractive power is required, there is a need to cause the large variation of the movement distance of the virtual image B as the distance becomes larger. It is noted that the distance s2 between the crystalline lens 5 and the retina N is hardly varied. Therefore, it is possible to approximately regard the distance s2 as the diameter of the eyeball. When the focusing function of the eye is properly functioned, the formula (3) is represented by the formula (4).

### Formula (4)

$$1/\phi = 1/s1 + D$$

When the stimulation applied to the focusing function of the eye is more than a certain level, it may be said that the time variation ($| \partial D/\partial t |$) of the refractive power of the crystalline lens 5 is more than a predetermined value constantly. Therefore, in order to apply the stimulation more than a certain level to the focusing function of the eyes, the formula (4) is defined as the formula (5). (G represents the threshold value.)

Formula (5)

$$\left|\partial D/\partial t\right| = \left|\partial(1/s1)/\partial t\right| = \left(1/s1^2\right) \times \left|\partial s1/\partial t\right| \geq \Gamma$$

In order to keep the time variation $|\partial D/\partial t|$ of the refractive power D at a constant value (at a threshold value G), the control unit 45 (shown in Fig. 1) is set to control the motor 44 (shown in Fig. 1 and to move the image display device 1 (shown in Fig. 1) such that the time variation $|\partial(1/s1)/\partial t|$ (which is an inversed number 1 /s1 of the distance s1 between the crystalline lens 5 and the virtual image B) is kept constant.

Specifically, in order to keep the time variation $|\partial D/\partial t|$ at a constant value (at a threshold value G) even if the distance S1 between the crystalline lens 5 and the virtual image B is varied, there is a need to increase the movement speed $|\partial s1/\partial t|$ of the virtual image B as the distance S1 between the crystalline lens 5 and the virtual image B is increased. In order to move the virtual image B at a purposed speed, the movement speed of the image display device 1 is calculated on the basis of the formula (1). In this case, b in the formula (1) means the distance s1. The control unit 45 is configured to control the operation of the motor 44 to increase the movement speed of the image display device 1 as the optical distance between the image display device 1 and the concave mirror 2 becomes greater. Consequently, it is possible to increase the movement speed $|\partial s1/\partial t|$ of the virtual image B as the virtual image B moves away from the crystalline lens 5 which is defined as the observation point.

Hereinafter, the concrete example of the movement speed of the virtual image B of the image is explained. Formula (6) shows the unit of measurement of the diopter by the distance S1 which is defined between the crystalline lens 5 and the virtual image B.

Formula (6)

$$Ds = 1/s1$$

In this case, the formula (4) is represented by the formula (7).

Formula (7)

$$1/\phi = Ds + D$$

As a result, the formula (8) is led from the formula (7).

Formula (8)

$$\left|\partial D/\partial t\right| = \left|\partial Ds/\partial t\right| \geq \Gamma$$

" G" represents the threshold value.

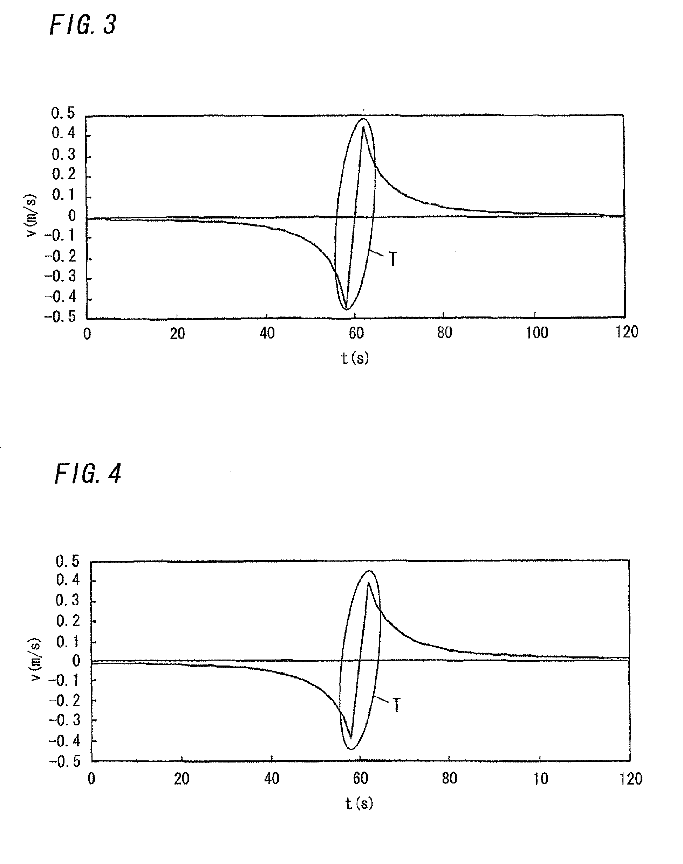

For example, when the tensional force of the musculus ciliaris is varied at a constant speed, the " $|\partial Ds/\partial t|$ " has a constant value according to the formula (8). That is, when the time variation $|\partial D/\partial t|$ of the refractive power D of the crystalline lens 5 is kept at a constant value, the "$|\partial Ds/\partial t|$ " has a constant value according to the formula (8). This is a movement speed of the movement speed principle in this embodiment. The movement speed is simply led and follows the physiological aspect with regard to the focusing function of the eyes. The control unit 45 (shown in Fig. 1) is configured to control the motor 44 to move the image display device (shown in Fig. 1) in line with the above principle. Fig. 3 shows the movement speed v within one cycle. In the one cycle, the control unit 45 controls the motor 44 to vary the distance S1 (between the crystalline lens 5 and the virtual image B) from 0.5 meters to 5.0 meter. The one cycle has a period of 120 seconds. When operation is performed according to the principle, the movement speed v is rapidly varied in the end point of 5.0 meters of the distance s1 between the crystalline lens 5 and the virtual image B. Therefore, buffering time T is provided. The movement speed of the image display device 1 is calculated on the basis of the movement speed v and the formula (1).

As mentioned above, the image display device 1 is moved such that "the time variation $|\partial (1/s1)/\partial t|$ of the inverse number 1/s1 which an inverse number of the distance s1 between the crystalline lens 5 and the virtual image B" is kept constant. Consequently, the movement speed of the virtual image B is effectively increased as the virtual image B moves away from the crystalline lens 5 which is defined as an observation point. Therefore, it is possible to reduce the fatigue of the focusing function of the observer P.

By the way, as another embodiment of the movement speed, there is a means of keeping the absolute value of the movement speed of the image display device at a constant. In this case, similar to the above, the movement speed v in one cycle is shown in Fig. 4. In this case, the distance s1 between the crystalline lens 5 and the virtual image B is varied from 0.5 meters to 5.0 meters. One cycle is a period of 120 seconds. Similar to the above, the buffering time T is also provided to the time when the sign of the movement speed V is varied. The absolute value of the movement speed v is increased as the distance s1 between the crystalline lens 5 and the virtual image B becomes greater, similar to a case where the time variation of the diopter is constant. The maximum value and the minimum value of the movement speed v is different from a case where the time variation of the diopter is constant. The movement speed v shown in Fig. 4 is also has a speed which is adapted to the physiological aspect of the eye. In addition, the movement speed v in Fig. 4 has an advantage that it is possible to simply control the movement of the image display device 1.

In addition, the control unit 45 shown in Fig. 1 is configured to control the motor 44 such that the image display device is reciprocated repeatedly. Consequently, the image display device 1 is periodically and continuously moved within a range between the concave mirror 2 and the focus position. According to this reciprocation of the image display device 1, it is possible to vary the refractive power D of the crystalline lens 5 (shown in Fig. 2) of the observer P effectively. Therefore, it is possible to reduce the fatigue of the focusing function of the observer P. In addition, according to the periodical reciprocation of the image display device 1, it is possible to vary the refractive power D of the crystalline lens 5 of the observer P at short intervals. Consequently, it is possible to reduce the fatigue of the focusing function of the observer P. Furthermore, the image display device 1 is continuously moved, whereby the optical distance between the image display device 1 and the concave mirror 2 is continuously. As a result, the virtual image B (shown in Fig. 2) is gradually moved. Therefore, it is possible to prevent the observer P from being aware of the virtual image B.

Next, the explanation of the operation of the target presentation device when the observer P uses the target presentation device is made. First, the observer P faces toward the direction of the concave mirror 2 (in other words, toward the x direction in Fig. 1). Then, the observer P watches the virtual image B (shown in Fig. 2) of the image. When the control unit 45 starts the motor 44, the image display device 1 moves toward the upper direction. When the image display device 1 reaches to the upper limit position, the image display device 1 moves toward the lower direction. Subsequently, when the image display device 1 reaches to the lower limit position, the image display device 1 moves toward the upper direction. The image display device 1 repeats this operation. During this operation, the observer P keeps on watching the virtual image B.

In another usage example of the target presentation device in this embodiment, it is possible to dispose the target presentation device, which is independent from the device for VDT operation. In this case, the target presentation device in this embodiment is used when the user keep on operating the VDT operation over a certain period of time. Or, the target presentation device in this embodiment is used when the user's eyes are tired.

As mentioned above, according to this embodiment, the target presentation device is configured to project the virtual image B (defined as the target, shown in Fig. 2,) to the concave mirror 2, whereby the target presentation device provides the target to the observer P. Consequently, it is possible to shorten the movement distance of the image display device 1, compared with a case where the image which is presented by the image display device 1. As a result, it is possible to downsize the device.

In addition, according to this embodiment, as the optical distance between the image display device 1 and the concave mirror 2 is increased, the position of the virtual image B moves away. In this condition, the movement speed $|\partial s1/\partial t|$ is increased. Consequently, it is possible to keep the time variation $|\partial D/\partial t|$ of the refractive power D in the crystalline lens 5 of the observer P more than a certain value when the virtual image B is located adjacent to the observation point. Similarly, it is possible to keep the time variation $|\partial D/\partial t|$ of the refractive power D in the crystalline lens 5 of the observer P more than a certain value when the virtual image B is moved away from the observation point. Consequently, it is possible to sufficiently reduce the fatigue of the focusing function of the observer P. That is, it is possible to keep the variation of the focusing function of the observer P more than a certain value, regardless of whether "the virtual image B is located adjacent to the observation point" or "the virtual image B is located far from the observation point".

In addition, according to this embodiment, the half mirror 3 is inclined with respect to the optical axis Lx of the concave mirror 2 such that the half mirror 3 crosses the optical axis Lx. Therefore, it is possible to prevent the image display device 1 from blocking the line of vision of the observer P when the target presentation device presents the virtual image B which is defined as the target.

In addition, according to this embodiment, the movement device 4 moves the image display device 1. Consequently, the virtual image B is moved. Therefore, there is no need for the observer P to vary the position of the eyes, compared with a case where the virtual image B is moved according to the concave mirror. That is, the observer P is able to watch the target at the same observation point.

Furthermore, in this embodiment, the virtual image B is reciprocated repeatedly. Consequently, the refractive power D of the crystalline lens 5 of the observer P is effectively varied. Therefore, it is possible to further reduce the fatigue of the focusing function of the observer P.

It is noted that the target presentation device in this embodiment employs the image as the object. However, for modification of the target presentation device, it is possible to employ the three dimensional body as the object, instead of the image. In this case, the three dimensional body is directly or indirectly attached to the holding plate 40, whereby the three dimensional body is configured to be movable. Even if the three dimensional body is employed as the object, the modification of the target presentation device is configured to perform the same operation, similar to this embodiment. As a result, it is possible to obtain the effect, similar to this embodiment. That is, there is a case where the virtual image is located adjacent to the observation point, and where the virtual image is located far from the observation point. However, regardless of the two case, the configuration of "increasing the movement speed of the virtual image such as three dimensional body as the virtual image moves away from the observation point" makes it possible to keep the time variation of the refractive power D of the crystalline lens 5 of the observer P. Therefore, it is possible to reduce the fatigue of the focusing function of the observer P sufficiently. That is, regardless of whether the virtual image is located far from or close to the observation point, it is possible to consistently keep the variation of the focusing function of the observer P more than a certain value

In addition, there is a three method of varying the optical distance between the image display device 1 and the concave mirror 2. One is a method of moving only the image display device 1. One is a method of moving only the concave mirror 2. One is a method of moving both the concave mirror 2 and the image display device 1. The target presentation device in this embodiment comprises the distance adjustment means which is defined by the movement device 4 which is configured to move only the image display device 1. As to the modification of the target presentation device, it is possible to employ the distance adjustment means which is defined by the concave mirror movement device which is configured to move the concave mirror 2 toward the optical axis of the concave mirror 2. Alternatively, it is also possible to employ the movement device 4 and also the concave mirror movement device as the distance adjustment means. The target presentation device with this configuration is capable of moving the virtual image B by moving the concave mirror 2. However, in order to correctly observe the virtual image B of the observer P, the position of the eyes of the observer relative to position of the concave mirror 2 is limited within a predetermined range. Therefore, in order to move the concave mirror 2, there is a need to move the position of the eyes of the observer P. Therefore, the method of moving only the image display device 1 is a best method among the above three methods. That is to say, there is no need for the method of moving only the image display device 1 to move the eyes of the observer P. So, the movement device 4 of this embodiment has an advantage, compared with the concave mirror movement device. Therefore, the movement device 4 of this embodiment is realistic. This is similar to the second embodiment to tenth embodiment which are hereinafter explained.

(Second embodiment)

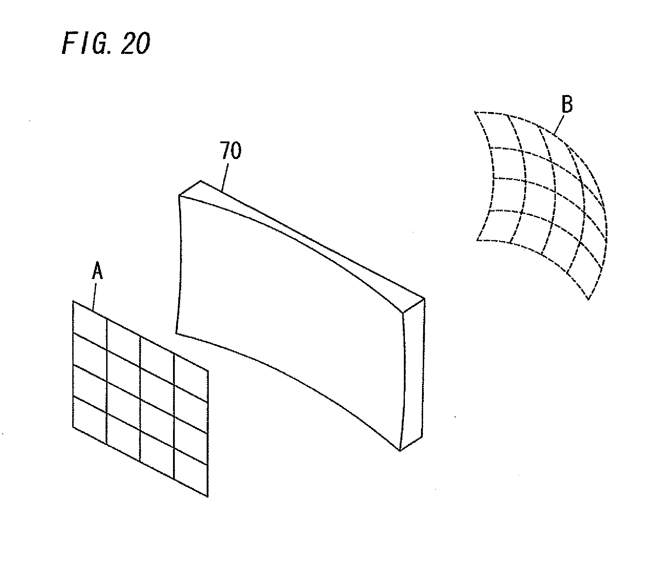

In the prior target presentation device, the observer P (shown in Fig. 1) observes the object A through the concave mirror 70 which has a spherical surface which is a mirror surface. Therefore, as shown in Fig. 20, the virtual image B which is formed on the concave mirror 70 is curved. That is, the prior target presentation device causes the curved curvature. As a result, according to the binocular disparity of the observer P, the observer P recognizes the virtual image B as the three dimensional body (like a bobbin shape). Especially, this is remarkable in the horizontal direction in parallel with a direction which passes through both the eyes. Specifically, according to the binocular disparity of the observer P, the observer P recognizes the virtual image B which has a center (defined as gazing point) which is depressed, and which has ends which are curved toward a front direction. That is, even if the object A has a surface which is flat, the observer P recognizes that the object A as the three dimensional body when the observer watches the virtual image B.

The observer P recognizes a sense of depth as the three dimensional appearance. In other words, the three dimensional appearance means the effect that gives the sense that the target being located adjacent to the observer P is located in a position further adjacent to the observer P, and that the target being located far from the observer P is located in a position further far from the observer P. There is a case where the point other than the gazing point is formed on a position of the left and the right retina which does not correspond to each other. In this case, the binocular disparity gives the sense of the three dimensional appearance to the observer P. When the observer P observes the virtual image B by both eyes, the virtual image B is located further adjacent to the standard plane with respect to the virtual image B, compared with a case where the virtual image B is observed by the single eye, Similarly, when the observer P observes the virtual image B by both eyes, the virtual image B is located further far from the standard plane with respect to the virtual image B, compared with a case where the virtual image B is observed by the single eye. Such an affection is prominence with respect to the horizontal direction in parallel with a direction which passes through both the eyes.

As mentioned above, the observer P recognizes the virtual image of the planar object A as three dimensional appearance. This means that the observer P watches the virtual image B as a virtual image B having a distortion. In other words, the virtual image B has the distortion.

Therefore, the prior target presentation device gives the virtual image B having the distortion to the observer P in order to reduce the fatigue of the focusing function of the observer P. However, there is a problem that the prior target presentation device gives the sense of discomfort and a sense of displeasure to the observer P.

The prior method of solving the above problem, there is a solution to increase the curvature radius of the mirror surface of the concave mirror 70. However, simply increasing of the curvature radius of the mirror surface of the concave mirror lengthen the focal point distance "f" of the concave mirror 70. According to the formula (1) and (2), even if the object A is moved similar to the above, the movement range of the virtual image B is reduced. Similarly, the enlargement factor of the virtual image B is decreased. Therefore, there is a need to broaden the movement range of the object A in order to increase the movement range of the virtual image B. This results in failure of achieving both the requirement of downsizing of the target presentation device and large movement of the target.

In view of this and in order to solve the above problem, the explanation of the target presentation device in the second embodiment is made in the second embodiment. According to this embodiment, it is possible to downsize the target presentation device. In addition, it is possible to give the reducing effect of the fatigue of the focusing function of the eyes without regard for the distortion of the target with respect to the observer P.

First, the configuration of the target presentation device in this embodiment is explained. Fig. 1 shows the configurations of the target presentation device in this embodiment. The target presentation device shown in Fig. 1 comprises the image display device 1, the concave mirror 2, a half mirror 3, a movement device, similar to the first embodiment. The virtual image B (shown in Fig. 17) is formed by the concave mirror 2, whereby the target presentation device is configured to present the virtual image B as the target.

The image display device 1 has configurations which is same as the image display device 1 in the first embodiment. The image display device 1 in this embodiment is provided for producing the target, whereby the image display device corresponds to the object in this invention.

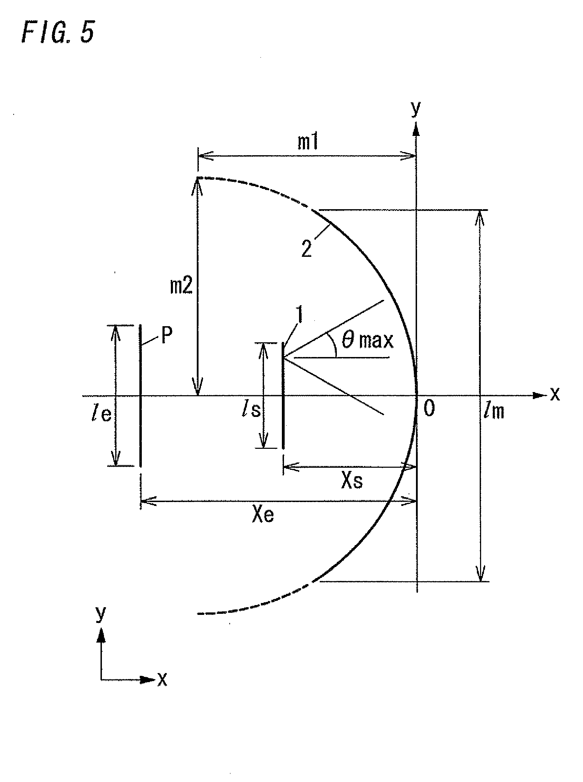

Next, the design of the concave mirror 2 in two dimensional (xy plane in Fig. 5) is explained with using Fig. 5. In order to explain simply, Fig. 5 only the image display device 1 and the concave mirror 2. Therefore, the half mirror 3 (shown in Fig. 1) is omitted. The mirror surface of the concave mirror 2 is an oval spherical plane of the asperic surface. The image display device 1 has a flat plane. The design parameter is explained. The concave mirror has an axis m1 and an axis m2. The concave mirror 2 has width lm. The image display device 1 has a width ls. The observer P has a width le of the eyes. The image display device 1 is positioned in the position xs. The position of the eyes of the observer P is defined as a position xe. The maximum angle of the light which is emitted from each point on the image display device 1 is defined as maximum angle θmax.

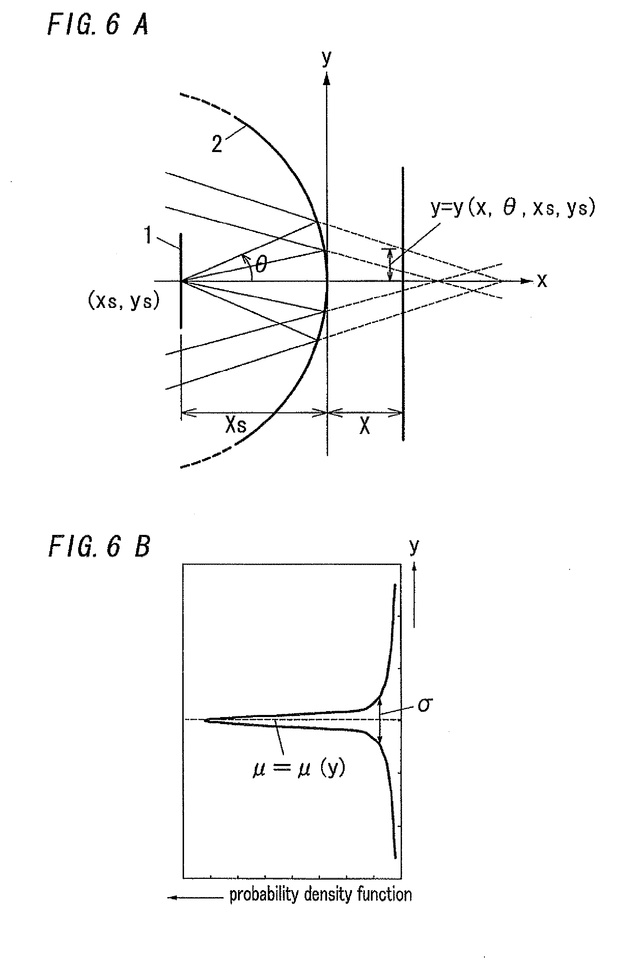

The position of the form of the image of the virtual image B is determined as follows on the basis of the spherical aberration. As shown in Fig. 6A, when the reflected light that the light being projected from the arbitrary point (xs, ys) of the image display device 1 toward the θ direction is extended to the rear side (x > 0) of the concave mirror 2, the light which is projected from the image display device 1 passes through the point (x, y(x, θ, xs, ys)) in the arbitrary x ( > 0 ). Considering y within the range of - θmax < θ < θmax, y in the arbitrary x has a probability distribution shown in Fig. 6B. The distribution of y in the arbitrary x is represented by the following standard variation. s = s (x, xs, ys) If a minimum standard variation of the standard variation of each x is defined as xf, the position (xf , yf) of the virtual image which is formed by the light which is projected from the point (xs, ys) of the image display device 1 to the direction of -θmax < θ < θmax is determined as (xf, μ(y)). μ(y) is an average value of y (xf , θ , xs , ys) in the range of -θmax < θ < θmax in the condition where the x = xf is satisfied. The position (xf, yf) of the virtual image B is a position "where the light which is projected from the point (xs , ys) of the image display device 1 toward the direction of -θmax < θ < θmax" is virtually and greatest focused.

In this embodiment, the design parameters shown in Fig. 5 is as follows. 1m = 150 mm, 1s = 70 mm. le = 100 mm. xe = -100 mm. θmax = 10 degrees. The reflection ratio of the concave mirror 2 is 1.0 . The concave mirror 2 is formed to have an oval spherical surface (aspheric surface) which is the mirror surface, and satisfies the following parameter. (m1, m2) = (300mm, 310 mm). In the concave mirror 2, the axis m2 is longer than the axis m1. Therefore, a curvature radius of the mirror surface of the concave mirror 2 becomes greater toward the center of the mirror surface. Specifically, the curvature radius of the center of the mirror surface is 320.33 mm. In contrast, the curvature radius of the edge of the mirror surface is 318.44 mm. In z direction (second direction) which is perpendicular to y direction (first direction) which passes through the both eyes of the observer P, the concave mirror 2 has the mirror surface which is spherical surface. Therefore, the ratio of the curvature radius of the center of the mirror surface with respect to the curvature radius of the edge of the mirror surface in the y direction is greater than that in the z direction. Hereinafter, the virtual image B which is formed by the concave mirror 2 of this embodiment is explained. In this embodiment, the virtual image is formed by the concave mirror which has the spherical surface having the mirror surface which satisfies the condition of (m1, m2) = ( 300mm, 300 mm). As to the comparative example, the virtual image is formed by the concave mirror which has the spherical surface having the mirror surface which satisfirs the condition of (m1, m2) = (310mm., 310mm).

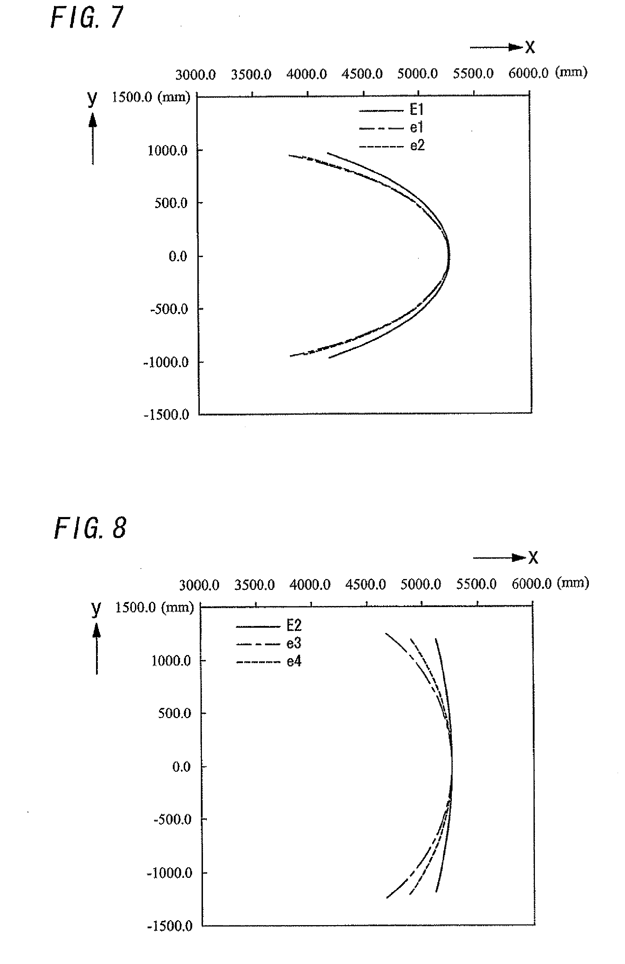

Fig. 7 shows the virtual images B of this embodiment (which is indicated by E1 in Fig. 7), the comparative example 1 (e1), and the comparative example 2 (e2). In these embodiment and comparative examples, the distance xs are set such that the virtual image B has a center which is located at a position which coincides with centers of the virtual images B of the comparative examples 1 and 2. If the difference between the position of the center of the virtual image B and the edge of the virtual image B in x direction is defined as d, d is 1086.0 mm in this embodiment. In contrast, d is 1424.4 mm in the comparative example 1. d is 1324.2 mm in the comparative example 2. The difference d of the position in this embodiment is 23.8 % smaller than the comparative example 1, and is 18.0 % smaller than the comparative example 2. According to the above, the distortion of this embodiment which employs the mirror surface which is aspheric surface. It is noted that the distance xs is equal to -155.1 mm in this embodiment, xs is equal to -145.5 mm in the comparative example 1, and xs is equal to -150.2 mm in the comparative example 2.

According to the above, it is possible to reduce the distortion of the virtual image B (that is, the three dimensional appearance of the virtual image B) by employing the concave mirror 2 which has the mirror surface which is aspheric surface, compared with a case where the concave mirror 2 having the mirror surface which is spherical surface is employed. Especially, it is preferred to employ the concave mirror having the mirror surface which is aspheric surface to have the curvature radius which is gradually increased toward the center. The concave mirror 2 in this embodiment corresponds to the reduction means in this invention.

Also in this embodiment, the control unit 45 is configured to control the operation of the motor 44, where by the movement speed of the image display device 1 is increased as the optical distance between the image display device 1 and the concave mirror 2 becomes longer. According to the configuration that the image display device 1 is moved as mentioned above, the movement speed of the virtual image B is effectively increased as the virtual image B is moved away from the crystalline lens. So, it is possible to fatigue the focusing function of the observer P.

The operation of the target presentation device when the observer P uses the target presentation device in this embodiment is similar to the operation of the target presentation device in the first embodiment.

As to another usage of the target presentation device, it is possible to dispose the target presentation device which is independent from the device for VDT operation. In this case, when the user performs VDT operation over a certain period of time, the user uses the target presentation device. In addition, when the user's eyes is fatigued, the user uses the target presentation device.

As mentioned above, according to this embodiment, the distortion (three dimensional appearance) of the virtual image B which acts as the target is reduced, the target presentation device is configured to prevent the fatigue of the focusing function of the eyes, without much regard for the distortion of the target.

In addition, according to this embodiment, the mirror surface of the concave mirror 2 is realized by the aspheric surface. The curvature radius of the mirror surface of the concave mirror 2 becomes greater toward the center. Consequently, it is possible to reduce the distortion of the target, regardless of whether that the image display surface 10 (surface) of the image display device 1 has a flat surface or the image display surface 10 of the image display device 1 has a curved surface. Especially, in this embodiment, the ratio of the curvature radius of the center of the mirror surface to the curvature radius of the edge of the mirror surface in y direction (first direction) which passes through both the eyes of the observer P is greater than the ratio of the curvature radius of the center of the mirror surface to the curvature radius of the edge of the mirror surface in z direction (second direction) which is perpendicular to y direction. Therefore, it is possible to reduce the distortion of the target in y direction than the distortion of the target in z direction. So, it is possible to prevent distortion, three dimensional appearance, of the virtual image B caused by the binocular disparity.

It is noted that the target presentation device in this embodiment employs the image display device 1 as the object. However, as to the modification of the target presentation device, it is possible to employ the three dimensional body as the object, instead of the image display device 1. In this case, the three dimensional body is directly and indirectly attached to the holding plate 40, whereby the three dimensional body is configured to be movable. Even if the three dimensional body is used as the object, it is possible to perform the operation similar to this embodiment. As a result, an effect similar to this embodiment is obtained. This is similar to the third embodiment to fifth embodiment, and seventh embodiment to tenth embodiment.

In addition, as to the modification of the embodiment, it is possible to employ the concave mirror 2 having the mirror surface which is aspheric surface in y direction which connects both the eyes of the observe P and also in z direction perpendicular to y direction. In this case, the concave mirror 2 has the mirror surface which is oval spherical surface, and which satisfies the parameter of (300 mm, 310 mm). The curvature radius of the center is 320.33 mm. The curvature radius of the edge is 318.44 mm.

(Third embodiment)

In the explanation of the third embodiment, the concave mirror 2 having a size which is greater than a size of the concave mirror 2 in the second embodiment is employed.

In this embodiment, design parameters (shown in Fig. 5) are as follows. lm = 600 mm. ls = 280 mm. le = 100 mm. xe = -600 mm θmax = 10 deg The concave mirror 2 has an oval spherical surface which is a mirror surface having the following parameter. (m1, m2) = (1200mm , 1300 mm) A center of the mirror surface of the concave mirror 2 of this embodiment has a curvature radius of 1408.33 mm. An end of the mirror surface of the concave mirror has a curvature radius of 1389.02 mm. Hereinafter, the virtual image B which is formed by the concave mirror 2 of this embodiment is explained, compared with the virtual image B which is formed by the concave mirror (of comparative example 3) having the parameter of (m1 , m2) = (1200 mm , 1200 mm) and with the virtual image B which is formed by the concave mirror (of comparative example 4) having the parameter of (m1 , m2) = (1300 mm, 1300 mm). It is noted that the design parameter of the concave mirror 2 in the x-z plane is same as the design parameters of the concave mirror 2 in the x-y plane. That is, the mirror surface of the concave mirror 2 has an oval spherical surface having a parameter of (1200 mm , 1300 mm) in the z direction. The curvature radius of the center is 1408.33 mm. The curvature radius of the end is 1389.02 mm.

Fig. 8 shows the shape of the virtual images B of this embodiment (E2 of Fig. 8), the comparative example 3 (e3), and the comparative example 4 (e4). It is noted that the distance xs is set such that the centers of the virtual images B in this embodiment, the comparative example 3, and the comparative example 4 are all positioned in the same position. The difference between the position of the end of the virtual image B in x direction and the position of the center of the virtual image B in x direction is defined as d. In this case, each one of the d are set as follows. d = 138.6 mm (in this embodiment). d = 591.6 mm (comparative example 3) d = 383.8 mm (comparative example 4) Difference of the position d in this embodiment is 76.6 % smaller than the difference of the position d in the comparative example 3. Difference of the position d in this embodiment is 62.9 % smaller than the position d in the comparative example 4. According to the above, the distortion in this embodiment (which employs the mirror surface which is aspheric surface) is smallest. It is noted that distances xs are set as follows. xs = - 620.6 mm (second embodiment) xs = -538.2 mm (comparative example 3) xs = - 578.1 mm (comparative example 4).

As mentioned above, even if the concave mirror 2 has a large size like this embodiment, it is possible to reduce the distortion of the target. Therefore, it is possible to prevent the fatigue of the focusing function of the eyes of the observer P, without much regard of the distortion of the target.

(Fourth embodiment)

The fourth embodiment explains a case where the concave mirror 2 having a size which is smaller than the size of the concave mirror 2 in the second embodiment.

In this embodiment, the design parameters (shown in Fig. 5) are set as follows. lm = 50 mm is = 24mm le = 15 mm ( le is designed with consideration of a sense of vision of one eye.) xe = - 50mm θmax = 10 deg The concave mirror 2 in this embodiment has an oval spherical surface which is a mirror surface having the following parameter. (m1, m2 ) = (100mm , 105 mm) The center of the mirror surface of the concave mirror has a curvature radius of 110. 25 mm. In contrast, the end of the mirror surface of the concave mirror has a curvature radius of 109.30 mm. Hereinafter, the virtual image B which is formed by the concave mirror 2 having the mirror surface of this embodiment is explained, compared with the virtual image B which is formed by the concave mirror (comparative example 5) having the mirror surface with the parameter of (m1 , m2) = (100mm, 100mm) and the virtual image B which is formed by the concave mirror (comparative example 6) having the mirror surface with the parameter of (m1, m2) = ( 105 mm, 105 mm). It is noted that the design parameter of the concave mirror in the x-z plane is same as the design parameter of the concave mirror 2 in x-y plane. That is, the concave mirror 2 has the mirror surface which is an oval spherical surface having a parameter of (100mm, 105 mm) in z direction. The curvature radius of the center is 110.25 mm. The curvature radius of the end is 109.30 mm.

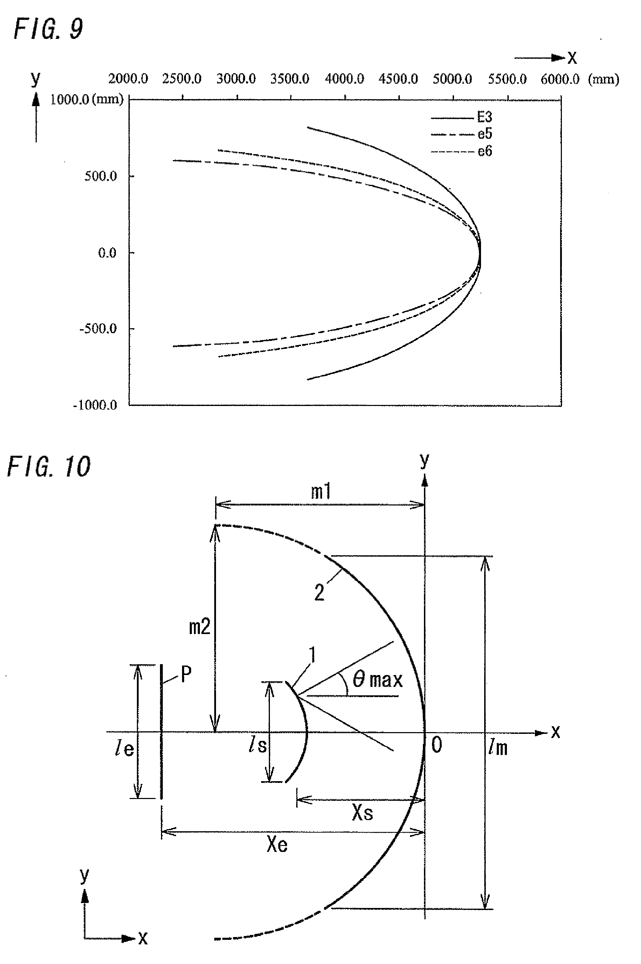

Fig. 9 shows the shapes of the virtual images B in this embodiment (E3 in Fig. 9), comparative example 5 (e5), and comparative example 6 (e6). The distance xs is set such that the centers of the virtual images B of this embodiment, the comparative example 5, and the comparative example 6 in the x direction are positioned in the same position. The difference between the position of the center of the virtual image B and the position of the end of the virtual image B is defined as d. In this case, d in this embodiment is equal to 1602.4 mm. d in the comparative example 5 is equal to 2849.6 mm. d in the comparative example 6 is equal to 2423.2 mm. The difference d of the position in this embodiment is 43.8 % smaller than the difference d of the position in the comparative embodiment 5. The difference d of the position in this embodiment is 33.9 % smaller than the difference d of the position in the comparative embodiment 6. According to the above, the distortion of this embodiment (which employs the mirror surface which is aspheric surface) is smallest. It is noted that the distance xs in this embodiment is equal to -54.5 mm. The distance xs in the comparative example 5 is -49.4 mm. The distance xs in the comparative example 6 is -51.9 mm.

As mentioned above, it is possible to reduce the distortion of the target, even if the concave mirror has a small size such as this embodiment. Therefore, it is possible to prevent the fatigue of the focusing function of the eyes, without regard to the distortion of the target.

(Fifth embodiment)

The fifth embodiment explains a case where the image display device 1 has a curved surface, instead of the flat surface. That is, in this embodiment, the image display surface 10 where the image is displayed is a curved surface.

The image display device 1 in this embodiment employs the flexible display which is freely bendable. The flexible display is exemplified by an organic EL display which employs the plastic film as the substrate, and the electronic paper of electrocataphoresis type. The image display device 1 defines the object and the reduction means in this invention.

By the way, the observer P is sensitive to the distortion of the virtual image B in the horizontal direction (y direction in Fig. 1) which passes through both the eyes than the distortion of the virtual image B in the vertical direction (in other words, a direction perpendicular to the horizontal direction, further in other words, in z direction of Fig. 1). This is because the binocular disparity. Therefore, considering the difficulty of the fabrication of the image display device, the image display device 1 has a shape to have a curvature which is projected toward the concave mirror. The curvature extends along a direction corresponding to the horizontal direction when only the image which is displayed by the image display device is projected toward the concave mirror 2 from the image display device. That is, the image display device 1 has a shape like a part of the cylinder (having a circular arc in the cross section). Therefore, the image display device 1 shown in Fig. 10 has a convex which is projected toward the right direction in the y direction. However, actually, the image display device (shown in Fig. 1) has the convex which is projected toward the lower direction.

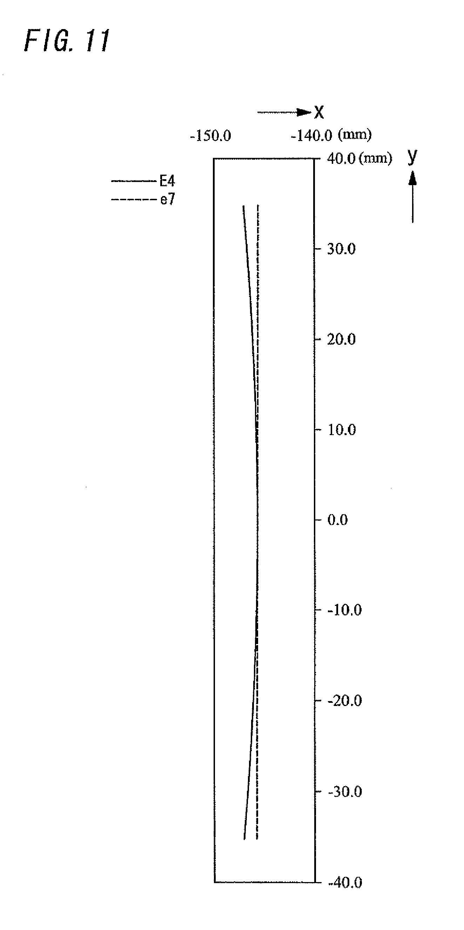

Fig .10 shows the design parameters. "m1" and "m2" indicates the axes of the concave mirror. "lm" indicates the width of the concave mirror 2. "ls" indicates the width of the image display device. "le" indicates the width of the entrance pupil of the observer P. The shape and the position are indicated by the formula of $xs = xs(y)$. "xe" indicates the position of the entrance pupil of the observer P. θmax indicates the maximum angle of the light which is emitted from each points on the image display device. The design parameters are set as follows. lm = 150 mm. ls = 70 mm. le = 100 mm. xe = -100mm θmax = 10 degree The concave mirror 2 in this embodiment has a spherical surface which is a mirror surface with following parameter. (m1, m2) = (300mm , 300 mm). The concave mirror 2 has a reflection ratio of 1.0 . In the two dimensional surface, the image display device 1 (light source) is a circular arc shaped light source. The image display device 1 has an apex as xs (0) = -145.5 mm. The image display device 2 has a convex which is projected toward the concave mirror 2. The radius "r" is equal to 450 mm. That is, the image display device 1 is as the circular arc shaped light source which satisfies the following formula. $\{xs(y) = (450^2-y^2)^{1/2}$-595.5mm. Hereinafter, the image display device 1 in this embodiment is explained, compared with an image display device (comparative example 7) which is a linear light source and which satisfies the following formula. $\{xs(y) = -145.5$mm , $xs(y)$ is constant} The shape of the image display device 1 in this embodiment and the comparative example 7 is shown in Fig. 11. This embodiment is shown in E5 of Fig. 11. The comparative example 7 is shown in e7 of Fig. 11.

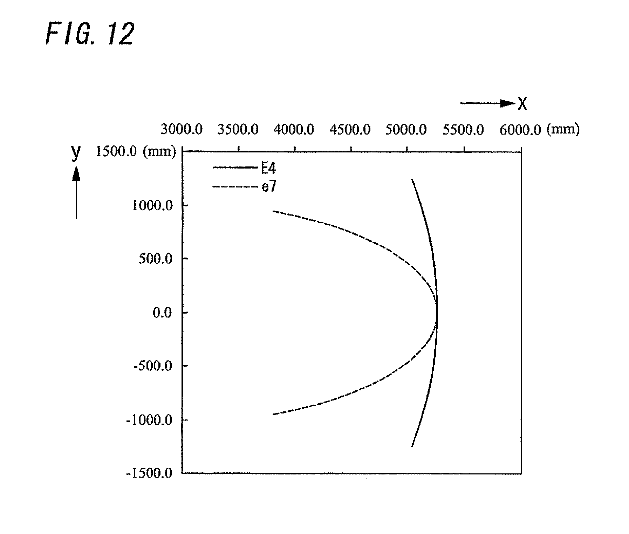

As shown in Fig. 12, the difference in x direction of the positions between the center of the virtual image B and the end of the virtual image B is defined as d. In this embodiment, d is equal to 220.80 mm ( shown in E4 of Fig. 12). In the comparative example 7, d is equal to 1424.4 mm (shown in e7 of Fig. 12). The difference d of the position in this embodiment is 84.5 % smaller than the difference d of the position in the comparative example 7. According to the above, the distortion of the virtual image B is reduced, compared with the distortion of the virtual image B.

However, the shape of the image display device 1 which creates the smallest distortion of the virtual image B is varied according to the average distance between the concave mirror and the image display device 1. Therefore, this embodiment comprises the mechanism which is configured to vary the shape of the image display device 1 on the basis of the distance between the image display device 1 and the concave mirror 2.

As mentioned above, according to this embodiment, the image display surface 10 (surface) of the image display device (object) is a curved surface. Therefore, it is possible to improve the reduction effect of the distortion of the target whether the mirror surface of the concave mirror 2 is a spherical surface or an aspheric surface.

In addition, according to this embodiment, the image display device has a convex which is projected toward the concave mirror 2. Therefore, it is possible to further reduce the distortion of the target.

In addition, according to this embodiment, it is possible to reduce the distortion of the virtual image B in a direction (y direction) which connects both the eyes of the observer P when the image is projected to the concave mirror 2. Therefore, even if the virtual image B has a flat plane, it is possible to prevent the virtual image B from having the three dimensional appearance due to the binocular disparity.

As to the modification of this embodiment, it is possible to employ the image display device 1 having a shape which is curved toward the vertical direction, instead of the image display device 1 having a shape which is not curved toward the vertical direction (in other words, a direction perpendicular to the horizontal direction which passes through both the eyes).

In addition, it is possible to combine the image display device 1 having a curved surface of the fifth embodiment with the concave mirror 2 having the mirror surface which is aspheric surface of second to fourth embodiments. For example, the concave mirror 2 is an oval spherical surface which is a mirror surface having a following parameter. (m1, m2) = (300mm, 310mm) The image display device 1 is a circular arc shaped light source. The image display device 1 has an apex which is defined by the following formula. Xs(0) = -145.5 mm. The image display device 1 is projected toward the concave mirror 2. The image display device has a radius r which is equal to 450 mm. That is, the image display device is a circular arc shaped light source which satisfies the following formula. $xs(y) = (450^2-y^2)^{1/2}-595.5mm$. Each the design parameters are same as the design parameters of the fifth embodiment. This structure is also possible to prevent the fatigue of the focusing function of the eyes to the observer P, without regard of the distortion of the target.

(Sixth embodiment)

In the six embodiment, a case where the image display device 1 is configured to display the image which is distorted on the basis of the distortion of the virtual image B is explained. The image of this embodiment is, in advance, distorted by the image procession such that "the distortion (three dimensional appearance) of the virtual image B which is displayed on the concave mirror 2 by the image display device" is reduced.

The image display device 1 in this embodiment is, similar to the second embodiment, the flat panel display. The image display device 1 in this embodiment is integrated with the image procession means (not shown) or is independent from the image procession means (not shown). The image procession means performs the image procession on the basis of the rule which is set in advance. In this embodiment, the image which is displayed on the flat panel display corresponds to the object and the reduction means in this imvention.

As mentioned above, in this embodiment, the image which is displayed on the flat panel display is distorted in advance. Therefore, it is possible to improve the reduction effect of the distortion of the target regardless of whether the mirror surface of the concave mirror has a spherical surface or aspheric surface. That is, if the image is distorted in advance like this embodiment, the distortion of the virtual image B is reduced. Therefore, it is possible to prevent the fatigue of the focusing function of the eyes of the observer P, without regard for the distortion of the target.

It is noted that it is possible to combine the concave mirror having a mirror surface which is aspheric surface explained in second to fourth embodiment with the image which , in advance, includes the distortion with consideration of the distortion of sixth embodiment. Also with this configuration, it is possible to prevent the fatigue of the focusing function of the eyes, without regard for the distortion of the target.

(Seventh embodiment)

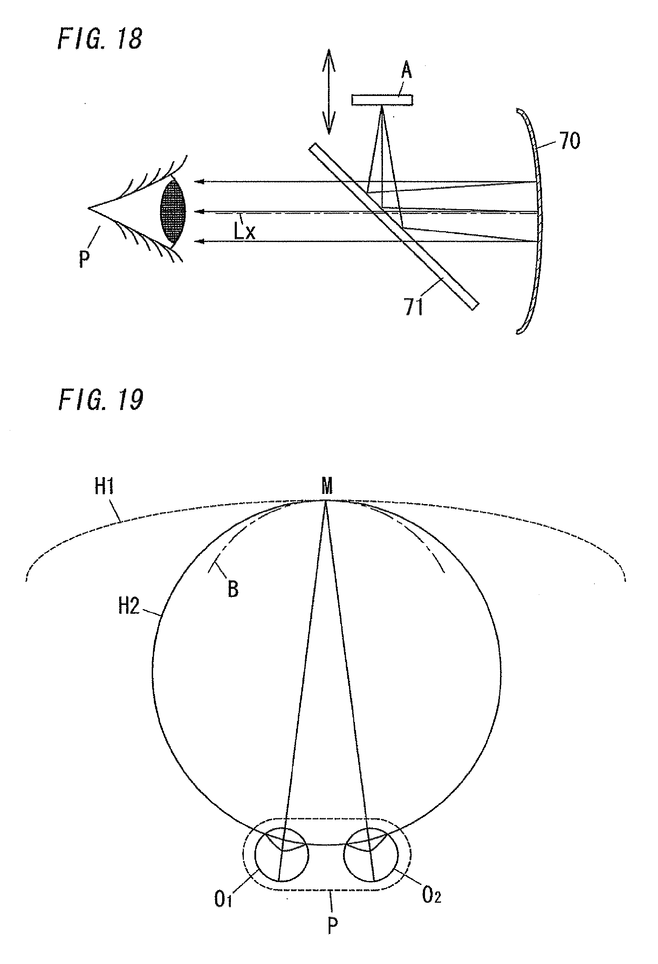

By the way, the purpose of the second to sixth embodiments is form the image having the flat plane, by the virtual image B. However, actually, as shown in Fig. 19, when the observer P watches the point M, the concentration of the point where the image is formed corresponding to both the eyes is curved toward the direction of the position of the eyes in the left end and in the right end. That is, as shown in Fig. 19, standard plane of the disparity (horopter) which is formed corresponding to both the eyes is curved toward the direction of the position of the eyes in the left end and in the right end. This is referred as to an experimental horopter.

Therefore, in the seventh embodiment, a case with consideration of binocular disparity is explained with Fig. 19. In this embodiment, the shape of the image display device 1 and the shape of the mirror surface of the concave mirror 2 are varied such that the virtual image B is positioned in the position same as the position of the predetermined plane which is predetermined. The predetermined plane is defined as the plane which is average of the experimental horopters H1 which is in advance measured from a plurality of the peoples. In another embodiment, if the observer P is determined, it is possible to employ the predetermined plane which is defined as the plane which is the experimental horopter h1 which is in advance measured from the observer P. In order to position the virtual image to the position same as the experimental horopter H1, there is a need to design the design parameter with regard to the shape of the mirror surface of the concave mirror 2 and the surface of the image display device .

As mentioned above, in this embodiment, the virtual image B is positioned in a position where the experimental horopter H1 is positioned. Therefore, it is possible for the observer P to observe the entire of the virtual image clearly.

In addition, the node of the both eyes is defined as O1 and O2 when the observer P watches the point M. In this case, the horopter is geometrically determined as the following formula. Circle M - O1 - O2. (shown in H2 of Fig. 19) This is called as the geometrical horopter H2. It is known that the experimental horopter H1 on the basis of the subjective view of a living body is displaced from the geometrical horopter H2.

(Eighth embodiment)

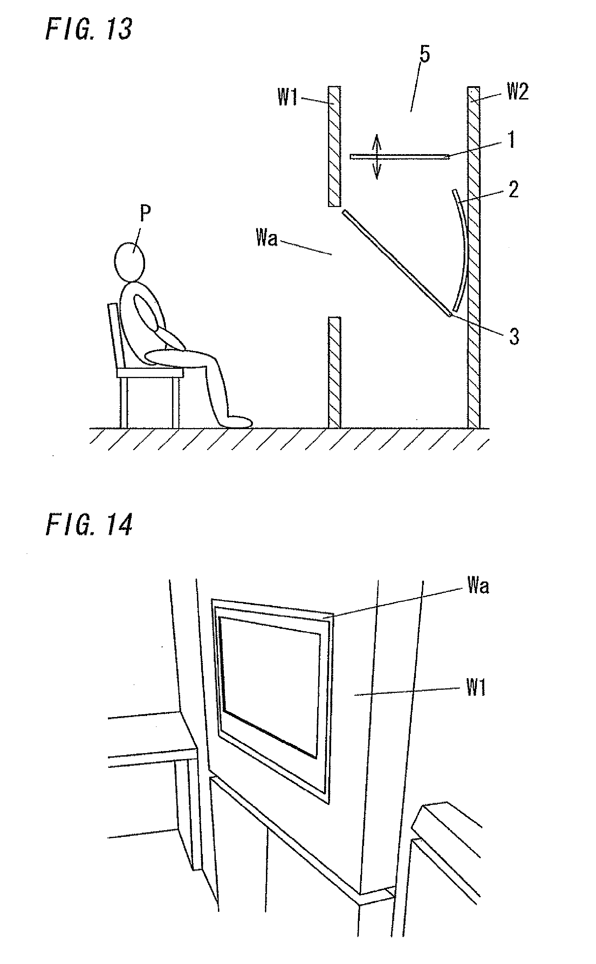

In the eighth embodiment, the image display system which comprises the target presentation device of first to seventh embodiments are explained with Fig. 13. The image display system is exemplified by the television and the projector. The image display system in this embodiment comprises the target presentation device and the image display device 1. That is, the target presentation device in this embodiment comprises the concave mirror 2, the half mirror 3 , and the movement device 4. However ,the target presentation device is independent from the image display device 1. The image display device 1 in this embodiment has a function of displaying in the virtual image (which includes the video picture) similar to the image display device 1 of the first to seventh embodiments.

By the way, each one of the target presentation device in the first to seventh embodiments comprises the concave mirror 2 and the half mirror 3. Therefore, if the image display system comprises the target presentation device in the first to seventh embodiments, the image display system has a large size, compared with the thin screen television. Therefore, there is a need to prepare a large installation space.

In view of this, the image display system in this embodiment is , as shown in Fig. 13, disposed in the space S which is prepared between the wall W1 and the wall W2. The wall W1 is formed with an opening Wa.

The concave mirror 2 in this embodiment is disposed along the wall W2. The concave mirror 2 is faced with the opening Wa. The half mirror 3 is disposed between the concave mirror 2 and the opening Wa. In this embodiment, the concave mirror 2 is disposed in the space S. Therefore, it is possible to diminish the curvature of the concave mirror 2. Therefore, it is possible to improve the visibility of the target of the observer P.

The image display device 1 is disposed in an upside of the half mirror 3 in the space S. The image display surface 10 is directed downwardly. The image display device 1 is realized by, for example, the liquid crystal display and a rear projector. The television program may employ as the image of the image display device 1. The regeneration picture from the reproduction equipment may employ as the image of the image display device 1. The image display device 1 is moved upwardly and downwardly by the movement device 4. Consequently, the target display device of this embodiment is moved such that the optical distance between the image display device 1 and the half mirror 3 is varied. As a result, the optical distance between the image display device 1 and the concave mirror 2 is varied.

In this embodiment, the image from the image display device 1 is reflected by the half mirror 3, whereby the image which is reflected by the half mirror 3 is sent toward the concave mirror 2. The virtual image B is sent from the concave mirror 2, and passes through the half mirror 3 and the opening Wa, whereby the virtual image B is presented to the observer P. Consequently, the target presentation device is configured to present "the target which is defined by the virtual image B which is displayed on the image display device 1" to the observer P.

As mentioned above, the image display system is disposed in the space S located in an inside of the wall. Therefore, even if the image display system for the target presentation device has a large size, it is possible to keep the living space large, compared with a case where the image display system is protruded from the wall W1. As a result, it is possible to improve the interior (as shown in Fig. 14).

It is noted that, as to the modification of this embodiment, it is possible to dispose the target presentation device with the image display system in the space in the sealing.

(Ninth embodiment)

The ninth embodiment explains a case where the target presentation device which comprises the display device for the vehicle (hereinafter, the display device for vehicle). The display device for vehicle comprises the target presentation device and the image display device 1. The image display device 1 is configured to provide the information with regard to the driving. The display device for the vehicle is exemplified by the gauge panel and the display unit of the navigation system.

The driver watches the far area or the near area according to the situation during the driving. In contrast, the display device for vehicle is disposed adjacent to the location, whereby the actual distance between the display device and the driver is equal to or less than one meter. When the driver watches the front and the display of the vehicle alternately under a condition where there is a difference between the visual distance of the front and the visual distance of the display of the display device for the vehicle, there is a need for the driver to vary the focusing function. Although it is a short period of time, the variation of the focusing function requires the time. Especially, in a case where the point of gaze is moved from the faraway front to the display (located in a near of the driver) of the display of the vehicle, the time explained in the above becomes long. In addition, the pupils are dilated in the night. Therefore, the time which is mentioned above is longer in the night than the daytime.

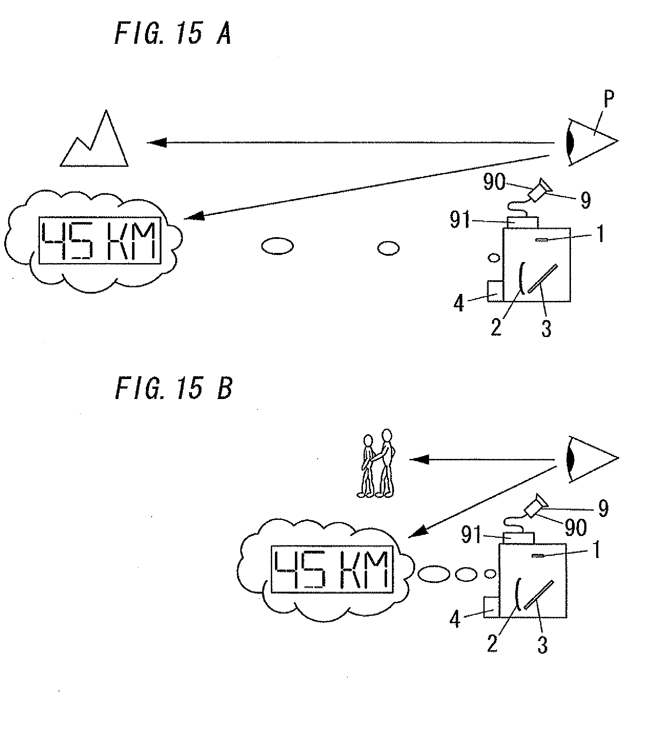

In view of this, the target presentation device in this embodiment, shown in Fig. 15A and Fig. 15B, comprises the visual distance estimation device 9 which is configured to decrease the time which is required for variation of the focusing function of the driver (observer P). The visual distance estimation device 9 is configured to estimate the visual distance of the driver. The target presentation device in this embodiment comprises a concave mirror 2, a half mirror 3, and a movement device 4, similar to the target presentation device in the first embodiment. The image display device 1 in this embodiment has a function equivalent to the display device for vehicle in existence.

Hereinafter, one example of the visual distance estimation device 9 is explained. The visual distance estimation device 9 comprises the observation unit 90 and the analysis unit 91. The observation unit 90 is configured to observe the eyes of the driver. The analysis unit 91 is configured to analyze the visual direction of the both eyes of the drivers from the image which is observed by the observation unit, whereby the analysis unit 91 estimates the visual distance on the basis of the convergence near point. The target presentation device is configured to vary the optical distance between the image display device 1 and the concave mirror 2 on the basis of the visual distance estimated by the visual distance estimation device 9, whereby the target presentation device varies the visual distance of the virtual image B which is defined as the display in the vehicle. In a case of watching the far location, as shown in Fig. 15A, the visual distance of the virtual image B is set to be long. In contrast, in a case of watching the near location, as shown in Fig. 15B, the visual distance of the virtual image B is set to be short. In this manner, it is possible to coincide the visual distance of the display of the vehicle with the visual distance of the front.

As mentioned above, according to this embodiment, the visual distance of the front where the driver (observer P) watches is coincided with the visual distance of the display in the vehicle. Therefore, it is possible to shorten the period of time which is required for the variation of the focusing function of the driver.

As to the modification of this embodiment, it is possible to employ the visual distance estimation device 9 which is independent from the target presentation device.

In addition, as to another modification of this embodiment, the display device for vehicle may have a function of fixing the position of the virtual image B. According to the function of fixing the position of the virtual image B, the visual distance of the virtual image B which is defined as the display in the vehicle is kept long. Consequently, it is possible to prevent the situation where the driver watches the faraway front immediately after the situation where the driver watches the display which is located near to the driver. That is, it is possible to prevent the situation where the period required for variation of the focusing function is longer than the period for variation of the focusing function in the other condition. In addition, there is no need for the target presentation device to employ the visual distance estimation device 9. Therefore, it is possible to simplify the configuration of the display device for vehicle.

The above explanation is only a preferred embodiment of this invention. Therefore, the above explanation does not limit the scope of the invention. The scope of the invention includes the modification which is made by the persons skilled in the art, and the modification within the specification.

This application claims the priority of the Japanese patent application No. 2008-278806 filed on October 29, 2008, and the priority of the Japanese patent application No. 2009-175857 filed on July 28, 2009. The contents of the above applications are fully contained in this application.

## Claims

1. A target presentation device for presenting a virtual image of an object as a target to an observer,
   said target presentation device comprising:

   a concave mirror having a focal point distance,
   said concave mirror being disposed such that the optical distance is set to be shorter than the focal point distance, said optical distance being defined by a distance between said concave mirror and said object,
   said concave mirror being configured to forms the virtual image; and
   a distance adjustment means being configured to vary the optical distance within a range which is set to be shorter than the focal point distance of the concave mirror,
   wherein
   as a distance to the virtual image becomes great, said distance adjustment means is configured to increase a movement speed of the virtual image.

2. The target presentation device as set forth in claim 1, further comprises a half mirror, said half mirror being disposed to be inclined with respect to an optical axis of said concave mirror,
   said half mirror crossing said concave mirror,
   the object being disposed to be reflected by a surface, faced with said concave mirror, of said half mirror, whereby the object is projected to the concave mirror, and
   said object being disposed such that the virtual image of the object is projected to the observer through the half mirror.

3. The target presentation device as set forth in claim 1, wherein
   said distance adjustment means is configured to move the object.

**4.** The target presentation device as set forth in claim 3, wherein
said distance adjustment means is configured to increase the movement speed of the object as the optical distance becomes great.

**5.** The target presentation device as set forth in claim 4, wherein
an observation point is located before said concave mirror,
said distance adjustment means being configured to move the object such that a time variation of an inverse number of the distance between the observation point and the virtual image of the object is kept constant.

**6.** The target presentation device as set forth in claim 3, wherein
said distance adjustment means is configured to vary the optical distance such that target is reciprocated repeatedly.

**7.** The target presentation device as set forth in claim 6, wherein
said distance adjustment means is configured to move the target periodically.

**8.** The target presentation device as set forth in claim 3, wherein
said distance adjustment means is configured to move the target continuously.

**9.** The target presentation device as set forth in claim 1, further comprising a flat panel display which is configured to display said image which is defines the object.

**10.** The target presentation device as set forth in any one of claims 1 to 9, further comprising a reduction means,
said reduction means being configured to reduce a distortion of the virtual image.

**11.** The target presentation device as set forth in claim 10, wherein
said reduction means comprises said concave mirror,
said concave mirror having a mirror surface which is aspheric surface so as to reduce the distortion of the virtual image.

**12.** The target presentation device as set forth in claim 11, wherein
said mirror surface of the concave mirror has a curvature radius which becomes greater toward a center of the mirror surface.

**13.** The target presentation device as set forth in claim 12, wherein
the concave mirror has a first ratio of a curvature radius of the center of the mirror surface to the curvature radius of an end of the mirror surface in a first direction,
said first direction passes through both eyes of the observer,
the concave mirror has a second ratio of a curvature radius of an center of the mirror surface to the curvature radius of an end of the mirror surface in a second direction,
said second direction being perpendicular to the first direction,
when the concave mirror presents the target to the observer, the first ratio is greater than the second ratio.

**14.** The target presentation device as set forth in claim 10, wherein
said reduction means is formed by using the object, and
said object has a surface which is a curved surface so as to reduce the distortion of the virtual image.

**15.** The target presentation device as set forth in claim 14, wherein
said object has a convex which projects toward the concave mirror.

**16.** The target presentation device as set forth in claim 15, wherein
said object is formed to be cylindrically curved, and
an axial direction of said object is perpendicular to a direction which passes through both eyes of the observer when the target is presented to the observer.

**17.** The target presentation device as set forth in claim 10, further comprises a flat panel display,
said flat panel display being configured to display an image,
said reduction means being formed by using the object,
said object being an image which is displayed on the flat panel display,
the image being deformed in advance such that the distortion of the virtual image which is projected to the concave mirror is reduced.

18. An image display system comprising:

the target presentation device as set forth in claim 1, and
an image display device being configured to display an image,
wherein
the target presentation device is configured to present the virtual image which is displayed on the image display device to the observer, and
the visual image being defined as the target.

19. A display device for vehicle comprising:

the target presentation device as set forth in claim 1,
an image display device being configured to provide an image information with regard to a drive,
wherein
the target presentation device is configured to present a virtual image of the image information which is provided by the image display device to the observer,
the virtual image being defined as the target.

20. The display device for vehicle as set forth in claim 19, wherein
said target presentation device further comprises a visual distance estimation device, said visual distance estimation device being configured to estimate a visual distance of the observer,
the visual distance estimation device being configured to vary the optical distance between the image display device and the concave mirror such that a visual distance of the virtual image becomes greater as the visual distance of the observer becomes greater.

FIG. 1

*FIG. 2*

*FIG. 3*

*FIG. 4*

FIG. 5

FIG. 6 A

FIG. 6 B

probability density function

FIG. 7

FIG. 8

## FIG. 9

## FIG. 10

*FIG. 11*

FIG. 12

*FIG. 13*

*FIG. 14*

FIG. 15 A

FIG. 15 B

*FIG. 16*

*FIG. 17*

*FIG. 18*

*FIG. 19*

*FIG. 20*

70

A

B

<table>
<tr><td colspan="2" align="center">**INTERNATIONAL SEARCH REPORT**</td><td>International application No.<br>PCT/JP2009/068379</td></tr>
</table>

| A. CLASSIFICATION OF SUBJECT MATTER |
|---|
| *A61F9/00*(2006.01)i, *A61B3/028*(2006.01)i, *A61F5/00*(2006.01)i, *A61F9/007*(2006.01)i |

According to International Patent Classification (IPC) or to both national classification and IPC

| B. FIELDS SEARCHED |
|---|
| Minimum documentation searched (classification system followed by classification symbols)<br>A61F9/00, A61B3/028, A61F5/00, A61F9/007 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 11-244239 A  (Nikon Corp.),<br>14 September 1999 (14.09.1999),<br>claims 1 to 15; paragraphs [0027] to [0034],<br>[0068], [0070] to [0076]; fig. 13<br>(Family: none) | 1-9,18-20<br>10-17 |
| Y<br>A | JP 07-051333 A  (Kabushiki Kaisha Gurin Gurasu),<br>28 February 1995 (28.02.1995),<br>paragraphs [0002], [0005], [0018], [0031]<br>(Family: none) | 1-9,18-20<br>10-17 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16 November, 2009 (16.11.09) | Date of mailing of the international search report<br>24 November, 2009 (24.11.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 351 544 A1**

**REFERENCES CITED IN THE DESCRIPTION**

**Patent documents cited in the description**

- JP 3766681 B
- JP H627411 A
- JP 11244239 A
- JP 2000171751 A
- JP 2008278806 A
- JP 2009175857 A